# EUROPEAN PATENT APPLICATION

(11) **EP 2 975 001 A1**
(43) Date of publication of application: **20.01.2016**
(21) Application number: 14762331.8
(22) Date of filing: 12.03.2014
(51) Int. Cl.: C01B 31/02, B82Y 30/00

(54) **METHOD FOR PRODUCING PREGRAPHITIC MATERIAL OXIDE, GRAPHENE OXIDE OR GRAPHENE FROM PREGRAPHITIC MATERIALS AND PRODUCTS PRODUCED BY SAID METHOD**

(30) Priority: 12.03.2013 ES 201330348
(71) Applicant: Consejo Superior De Investigaciones Científicas (CSIC), 28006 Madrid (ES)
(72) Inventor: MENÉNDEZ LÓPEZ, Rosa, E-33011 Oviedo (Asturias) (ES); ÁLVAREZ RODRÍGUEZ, Patricia, E-33011 Oviedo (Asturias) (ES); SIERRA GÓMEZ, Uriel Alejandro, E-33011 Oviedo (Asturias) (ES); BLANCO RODRÍGUEZ, Clara, E-33011 Oviedo (Asturias) (ES); GRANDA FERREIRA, Marcos, E-33011 Oviedo (Asturias) (ES); SANTAMARÍA RAMÍREZ, Ricardo, E-33011 Oviedo (Asturias) (ES)
(74) Representative: Pons Ariño, Angel
(86) International application number: PCT/ES2014/070178
(87) International publication number: WO 2014/140399

(57) **Abstract**

The invention relates to a method for producing a product selected from the group consisting of pregraphitic material oxide, graphene oxide and graphene, characterised in that it comprises transforming at least one pregraphitic material into the product without graphitisation treatment. Preferably, the pregraphitic material is coke (commercial or prepared from pitches, not only petroleum pitch but also carbon or synthetic pitches).

## Description

### SECTOR OF THE ART

The industry sector that the present invention is located within relates to coal/oil and their derivatives. It is specifically related to methods for the preparation of oxides of pregraphitic material, graphene oxides and graphenes. The application of this invention is directed at a number of sectors (imaging, microelectronics, catalysis) due to graphene's elevated potential for use in both emerging sectors (imaging, microelectronics) as well as in the implementation of other existing sectors (catalysis, energy, etc.).

### STATE OF THE ART

Graphene (a sheet of sp² hybridised carbon of monatomic thickness) has attracted great interest in recent years due to its extraordinary electronic and mechanical properties. These make it interesting for a multitude of applications such as the conversion and storage of energy (solar cells, supercapacitors), electronics (circuits based on graphene), etc. (see, for example, Camblor R., Hoeye S.V., Hotopan G., Vázquez C., Fernández M., Las Heras F., Alvarez P., Menéndez R. Microwave frequency tripler based on a microstrip gap with graphene. J. Electromag. Waves Appl. 2011, 25 (14-15), 1921-1929).

One of the problems in the implementation of the previously mentioned systems on an industrial scale is manufacturing graphene on a medium or large scale. The large-scale production of graphene is, currently, one of the greatest challenges for research in this field.

At present the preparation of graphene from graphite or graphitic derivatives using chemical methods is the method that most readily permits a scaling up of production and guarantees its large-scale industrial exploitation. In particular, the oxidation/exfoliation of graphite is the most widespread method. This process generates graphite oxide by oxidising graphite, the resulting material has the three-dimensional laminar structure of graphite but the sheets are oxidised both at the edges and in their basal planes. The separation of the sheets and formation of the material called graphene oxide is achieved during exfoliation, while the reduction of the unilamellar graphene oxide, which can be achieved by various methods, results in graphene. Furthermore, graphite oxide and graphene oxide are materials that are very interesting in themselves (see, for example, González Z., Botas C., Alvarez P., Roldán S., Blanco C., Santamaría R., Granda M., Menendez R. Thermally reduced graphite oxide as positive electrode in vanadium redox flow batteries. Carbon, 2012, 50 (3), 828-834).

It is possible to find numerous references to the use of graphites and graphitic materials as precursors in the preparation of graphene. The oxidation of graphite using a strong oxidising agent to give graphene oxide has been known since the nineteenth century. This method involves treating graphite with concentrated nitric acid, concentrated sulfuric acid and potassium chlorate (Staudenmaier L., Verfahren zur Darstellung der Graphitsäure, Ber. Dtsch. Chem. Ges., 1898, 31, 1481-1487). This methodology has been modified numerous times since then, with the principle objective of reducing the danger and difficulties in handling the reagents used. The well-known "Hummers' Method" is notable; it uses sodium nitrate, potassium permanganate and concentrated sulfuric acid to treat the graphite (Hummers W.S., Offeman R.E. Preparation of Graphitic Oxide, J. Am. Chem. Soc., 1958, 80 (6), 1339-1339).

Other alternatives that also use graphite include intercalation/exfoliation (US2009/0028778A1) or micromechanical exfoliation (Novoselv K.S., Geim A.K., Morozov S.V., Jiang D., Zhang Y., Dubonos S.V., Grigorieva I.V., Firsov A.A. Electric Field Effect in Atomically Thin Carbon Films. Science, 2004, 36 (5696), 666-699) even though the latter is not easily scalable. So far, alternatives to both natural and synthetic graphite only include other graphitic materials such as carbon nanofibres and short segments of graphitic carbon fibres (US2009/0028778A1). Only those examples that use mechanical processes to form graphene from graphite (US2010/0176337) have the potential to use ungraphitised derivatives (pregraphitic), although there has never been any evidence of their viability.

The principle characteristic that makes graphite an interesting material in the preparation of graphene is its polycrystalline and anisotropic structure that is composed of carbon sheets (carbon covalently bonded by graphene-like sp² bonds) but stacked three-dimensionally by relatively strong van der Waals forces. The crystalline dimensions of both the sheet (a-axis) and the stacking (c-axis) and an interplanar distance of approximately 0.34 A defines each graphite and relates them with the properties of the monolayer of graphenes obtained (Botas C., Alvarez P., Blanco C., Santamaría R., Granda M., Ares P., Rodríguez-Reinoso F., Menéndez R. The effect of the parent graphite on the structure of graphene oxide. Carbon, 2012, 50 (1), 275-282). The raw material, as regards natural graphite, is constrained by its limited availability (China, India, etc.) and location (geopolitical aspects). Moreover, the high ash content and other impurities that are typically present may have a negative impact on the properties of the graphene sheets. Furthermore, the preparation of synthetic graphite from graphitisable carbon precursors (mainly cokes that are precursor materials of cokes obtained at lower temperatures) require the use of temperatures of around 2,800-3,000 °C to give a completely graphitic structure, representing a significant energy and economic cost.

Graphitic materials such as carbon fibres or carbon nanofibres are very costly.

In contrast to the graphitic materials with a highly ordered structure, the pregraphitic materials only show a certain level of order (anisotropic materials) with Lc and La values ranging between around 3.66 nanometres (nm) and around 5.36 nm for Lc with interplanar distances of around 0.345 nm to 0.337 nm. These pregraphitic materials are excellent precursors for graphite through thermal treatments at temperatures of around 2,500-2,800 °C. However, up until now they have not been used directly in the preparation of graphene without the graphitisation step.

Considering the disclosures in the state of the art it would be expected that obtaining graphene from a pregraphitic material, without a graphitisation step, would not provide a high yield or, if undertaken, would present additional technical problems that would hinder implementation at an industrial scale, unlike the highly ordered graphite materials used until now.

### DESCRIPTION OF THE INVENTION

The present invention is based on the fact that the inventors have demonstrated that it is possible to obtain graphene through the transformation of a pregraphitic material that has not been subjected to a graphitisation treatment, while being based on traditional processes but more efficiently and profitably. Moreover, the processes followed (similar to the conventional ones) take place at a temperature of less than 1,500 °C, or less than 1,200 °C, or even less than 1,000 °C, thereby ensuring that it is impossible to produce the graphitisation of the pregraphitic material.

With the method described for the present invention, as well as graphene, it is also possible to obtain other products such as the oxide of the starting pregraphitic material and graphene oxide, which are valuable materials in themselves.

The present invention provides an advantageous method for obtaining the product selected from a group consisting of pregraphitic material oxide, graphene oxide and graphene, as pregraphitic materials are commercially readily available, highly abundant and their manufacture is much cheaper than synthetic graphite or other graphitic materials that attract a high price (those requiring a graphitisation step) or have limited strategic availability (as is the case for natural graphite).

The use of pregraphitic materials as alternatives to graphite and other graphitic materials has many economic, environmental, energetic and strategic advantages as they are products that are sold for many standard applications in industry today (anodes for the aluminium industry, etc.), which ensures their production. In addition, lower energy demands and lower temperatures are required for their preparation than for synthetic graphite. The economic interest in the implementation of the methodology of the present invention is thus very high.

Therefore, one aspect of the present invention refers to a method, hereinafter method of the invention, for obtaining graphene that comprises the treatment of a pregraphitic material through its laminar separation at a temperature lower than 1,500 °C, preferably lower than 1,200 °C, more preferably lower than 1,000 °C.

In a preferred embodiment and prior to treatment of the pregraphitic material it is milled or sieved to a size of at least 100 micrometers (µm) or less, more preferably between 70-100 micrometers (µm), this increases the speed of the subsequent treatment.

The laminar separation can be achieved through exfoliation, intercalation or thermal shock, among other techniques known to any expert in the subject matter. The laminar separation is preferably carried out through solvent exfoliation, for example and not limited to isopropanol, ethyl acetate or N-methyl-pyrrolidinone, among others, more preferably the solvent is N-methylpyrrolidinone, and more preferably ultrasound is used in the exfoliation.

With the method of the present invention, in addition to directly obtaining graphene through the transformation of the pregraphitic material it is also possible to obtain other products such as, for example, pregraphitic material oxide and/or graphene oxide, by adding intermediate steps to the reaction. Therefore, in another particular embodiment, the method of the invention also comprises the following steps:
a) optional milling or sieving of the pregraphitic material to a size lower than 100 micrometers (µm), preferably between 70-100 micrometers (µm),
b) oxidative transformation of the pregraphitic material or of the pregraphitic material from a) into its corresponding oxide,
c) optional separation and/or purification of the solid oxide obtained by the oxidation of the pregraphitic materials in b),
d) obtaining graphene oxide from the solid oxide obtained in b) or c), and
e) obtaining graphene from pregraphitic material or from the pregraphitic material in a) or from the graphene oxide in d);
wherein the temperature in any of the steps is lower than 1,500 °C, preferably lower than 1,200 °C, more preferably lower than 1,000 °C.

In a more preferred embodiment, step a) and/or step c) are not optional in such method, and although they are not essential they do enhance the effectiveness of the subsequent steps.

Therefore, a particular embodiment of the present invention is a method for obtaining a product selected from a group that comprises pregraphitic material oxide, graphene oxide and graphene, characterised by starting from a pregraphitic material, where none of the method's steps uses temperatures above 1,500 °C, preferably temperatures are lower than 1,200 °C, more preferably lower than 1,000 °C and comprising the following steps:
a) milling or sieving of the pregraphitic material to a size lower than 100 micrometers (µm), preferably between 70-100 micrometers (µm),
b) oxidative transformation of the pregraphitic material from a) into its corresponding oxide,
c) separation and/or purification of the solid oxide obtained by the oxidation of the pregraphitic materials in b),
d) obtaining graphene oxide from the solid oxide obtained in c), and
e) obtaining graphene from the graphene oxide in d).

A particular object is the method of the invention wherein the pregraphitic material in a) is coke, material easier to prepare and more readily available than graphite or the other graphitic materials commonly used in the manufacture of graphene.

These cokes can be petroleum cokes obtained from oil residues; carbochemical cokes obtained from tars originated from coal tar; or synthetic cokes obtained from highly aromatic derivatives such as, for example, anthracene oil or naphthalene. Different cokes can have different degrees of crystalline order, being this is always lower to the crystalline order of graphitic material obtained after its graphitisation.

It is also possible to use any other pregraphitic material obtained from other raw materials such as petroleum tars or synthetic tars in the method of the present invention, as well as pregraphitic materials obtained by other processes such as thermal treatments of precursors at temperatures below 1,000 °C or treatments of aromatic organic precursors at pressure.

Another particular object of the invention comprises the method of the invention wherein the method is used to obtain graphene and wherein the pregraphitic material is coke.

In a preferred embodiment of the invention the method of the invention is used to produce graphene and comprises a step a) of milling or sieving of the coke being used as the pregraphitic material with a particle size between 70-100 micrometers (µm).

Pregraphitic material can also be used in the method of the present invention without controlling the particle size. In this case longer reaction times may be required or stronger oxidising reagents than those indicated as preferred in the present patent application. Therefore, another particular object of the invention comprises the method of the invention in which step a) of milling or sieving is omitted and the method starts directly at step b).

The pregraphitic materials used as precursors in the method of the present invention can become transformed into pregraphitic material oxide, graphene oxide or graphene using the processes described in the state of the art that comprise the use of graphites or graphitic materials as starting materials. For example, the separation of their sheets through intercalation, thermal shock, etc. Likewise, they can also be obtained using methods described for the preparation of graphene, for example, chemical reduction, exfoliation and thermal reduction of coke oxide, reduction with hydrogen, etc. See, for example, reference US2009/0028778A1.

Another particular object of the invention comprises the method of the invention in which step b) involving the oxidative transformation of the pregraphitic material from a) into the corresponding oxide is performed through, for illustrative purposes and without limiting the scope of the invention, a technique included in the following group: chemical treatment or reduction, intercalation, thermal shock, exfoliation and thermal reduction of coke oxide and reduction with hydrogen.

A particular embodiment of the invention comprises the method of the invention wherein step b) for transforming the pregraphitic material from a) into its corresponding oxide through chemical treatment of the pregraphitic materials is undertaken using reagents such as sodium nitrate, potassium permanganate, sulfuric acid, hydrogen peroxide, distilled water and deionised water (Mili-Q), although the process is not limited to these reagents.

In a still more preferred embodiment, the present method of the invention step b) for transforming the pregraphitic material from a) into its corresponding oxide is undertaken through a chemical treatment using weight ratios for pregraphitic material/sodium nitrate/potassium permanganate of between 1/1/7 to 1/1/3 depending on the pregraphitic material. The preferred reaction volumes correspond to 20 vol% for sulfuric acid and 80 vol% for 3% hydrogen peroxide, with the volume percentages being expressed relative to the total reaction volume, or also 20 vol% for sulfuric acid and 8 vol% for hydrogen peroxide and 72% for distilled water, again expressed relative to the total reaction volume, wherein these proportions can vary depending preferably on the material's characteristics.

Another particular object of the invention comprises the method of the invention in which step c) involving the separation and/or purification of the solid oxide obtained from the oxidation of the pregraphitic material from b) is performed through, for illustrative purposes and without limiting the scope of the invention, a technique included in the following group: centrifugation and subsequent decantation of the supernatant, ultracentrifugation or dialysis.

In another preferred embodiment the method of the invention allows the separation of the oxide proceeding from the oxidation of the pregraphitic material, preferably solid coke. This separation is preferably undertaken through centrifugation and subsequent decantation of the supernatant. If it is not possible to separate the solid oxidised material using centrifugation it is possible to undertake the separation using ultracentrifugation, preferably at high speed, or dialysis.

In another preferred embodiment the method of the invention comprises the purification of the oxide proceeding from the oxidation of the pregraphitic material, preferably coke. In a still more preferred embodiment, this purification takes place through the repetition of the oxide separation sequences mentioned above, with the previous addition of deionised water, until the water removed by decanting has a neutral pH. However, a different type of water can also be used, as well as any other methodology such as, for example, filtration, dialysis or addition of other solvents, to wash the oxide of the graphite obtained.

Another particular object of the invention comprises the method of the invention in which step c) involving separation and/or purification is omitted.

A particular embodiment of the invention comprises the method of the invention wherein the pregraphitic material is coke and the product obtained is coke oxide. This coke oxide is obtained after steps a), b) and c).

Another particular object of the invention comprises the method of the invention in which step d) for obtaining graphene oxide from the solid oxide obtained in c) is undertaken through the separation of the graphene oxide sheets.

Another particular object of the invention comprises the method of the invention in which the separation of the graphene oxide sheets from step d) is performed through, for illustrative purposes and without limiting the scope of the invention, a technique included in the following group:-exfoliation and thermal shock. Moreover, in this sense the method described in this patent application can comprise the separation of the graphene oxide sheets, accompanied by a reduction of oxygenated functional groups, for example, through thermal treatment of the oxide of the material without exfoliation. See, for example, reference US2009/0028777A1.

In a still more preferred embodiment the separation of the graphene oxide sheets in step d) of the method of the invention is undertaken through the exfoliation of the oxides prepared from pregraphitic material, preferably cokes, preferably through ultrasound treatment, preferably for periods of between 60 minutes and eight hours in order to produce the corresponding graphene oxide.

The method of the invention allows obtaining oxides from coke preferably containing groups of 10-20 sheets with sizes varying between 500 nanometres and 20 nanometres, depending preferentially on the pregraphitic starting material. While the graphene oxides are preferably present in the form of a monolayer or bi-tri layers, all of them have a layer height that can vary between 0.6 and 3 nanometres. The measurements of size and grouping of the sheets of graphene oxide and oxides derived from coke are preferably determined using atomic force microscopy (AFM). Raman spectroscopy analysis has determined that the intensity ratios obtained for the band assigned to the presence of defects in the sheet - Band D- and that assigned to graphite-like carbon -Band G- (a ratio designated Id/Ig) has values between 0.9 and 1 depending on the material (Green Deter, Johnson A. Catherine and Thomas Mark. Applications of laser Raman microprobe spectroscopy to the characterization of coals and cokes. Fuel, 1983, 62, 1013-1023). The number of oxygen atoms for each 100 carbon atoms in each material is preferably between 17 and 24 atoms. The oxygen remaining in the sheet preferably forms part of alcohol, epoxy and acid type functional groups in varying proportions depending on the sample in question which have been determined through X-ray photoelectron spectroscopy (XPS). The values mentioned for these materials are within the order of those for graphite oxides and graphene oxides prepared from graphites and graphitic materials.

Another particular embodiment of the invention comprises the method of the invention wherein the pregraphitic material is coke and the product obtained is graphene oxide. This graphene oxide is obtained after steps a), b) c) and d).

Another particular object of the invention comprises the method of the invention in which step e) involving obtaining graphene from the graphene oxide of d) is performed through, for illustrative purposes and without limiting the scope of the invention, a reduction technique included in the following group: as a chemical reduction, with hydrogen, electrochemical reduction and combinations thereof. See also examples of reductions of graphite oxides and graphene oxides in reference WO2011/016889A2.

A particular embodiment of the invention comprises the invention's method in which step e) for obtaining graphene comprises a thermal reduction technique for graphene oxide under the following conditions:
i.- temperature in the range of 800-1,500 °C, preferably between 800-1,000 °C, or more preferably 1,000 °C, with heating ramps of around 1-30 °C minutes⁻¹, preferably 5 °C per minute;
ii.- residence time at the final temperature of between 0 and 2 hours, preferably for 1 hour, and
iii.- in an inert atmosphere such as, for example, nitrogen.

In addition, other reaction conditions can be used in place of the inert atmosphere mentioned above such as, for example, other gases such as argon or combinations of inert gases and reduced gases such as hydrogen. In addition, a broader range of temperatures, residence times or heating ramps can also be used. See, for example, reference US8066964B2.

The method described in this patent application allows obtaining graphene, preferably in a monolayer form with a height of between 0.6-3.0 nanometres, determined by AFM. The percentage of oxygen atoms for each 100 carbon atoms in the graphene is preferably under 3%, with pyrone-like functional groups, calculated using X-ray photoelectron spectroscopy (XPS). The obtained values are within the order of those for graphenes prepared from graphites and graphitic materials.

Another object of the invention comprises the product obtained through the method of the invention, hereinafter product of the invention, wherein the product belongs to the following group: an oxide of the starting pregraphitic material, graphene oxide and graphene.

Finally, another object of the invention comprises the use of the product of the invention for applications such as, for illustrative purposes and without limiting the scope of the invention, those belonging to the following group: catalysts, imaging devices, microelectronics and energy storage. Other examples can be found using, for example, the references Han D.L., Yan L.F., Chen W.F., Li W. Preparation of chitosan/graphene oxide composite film with enhanced mechanical strength in the wet state. Carbohyd. Polym., 2011, 83, 653-658 and González Z., Botas C., Alvarez P., Roldán S., Blanco C., Santamaría R., Granda M., Menendez R. Thermally reduced graphite oxide as positive electrode in vanadium redox flow batteries. Carbon, 2012, 50 (3), 828-834.

### DESCRIPTION OF THE FIGURES

Figure 1.- Optical microscopy image formed using polarised light of the cokes used as precursors in the preparation of coke oxides, graphene oxides and graphene showing the anisotropy, related with the sizes of the pregraphitic domains, of each of them: a) commercial carbochemical coke (cqc), b) coke prepared from semisynthetic carbochemical anthracene oil-based pitch (cqa), c) premium petroleum coke (cqp) and d) super premium petroleum coke (cqsp).
Figure 2.- Atomic force microscopy images of derivatives of commercial carbochemical coke: a) coke oxide -OGfc-, b) profile corresponding to (a), c) graphene oxide -OGc- and d) profile of the line indicated in (c).
Figure 3.- Thermogravimetric curves of the graphene oxides obtained from commercial carbochemical coke (OGc), coke prepared from semisynthetic carbochemical anthracene oil-based pitch (OGa), premium petroleum coke (OGp) and super premium petroleum coke (OGsp).
Figure 4.- Transmission electron microscopy images of graphene oxides obtained from cokes: a) carbochemical graphene oxide (OGc), b) graphene oxide from anthracene oil-based coke (OGa), c) graphene oxide from a premium petroleum coke (OGp), d) graphene oxide from a super premium petroleum coke.
Figure 5.- Atomic force microscopy images of derivatives of a coke prepared from semisynthetic carbochemical anthracene oil-based coke: a) coke oxide -OGfa-, b) profile corresponding to (a), c) graphene oxide -OGa- and d) profile of the line indicated in (c).
Figure 6.- Atomic force microscopy images of derivatives of a coke prepared from a premium petroleum coke: a) coke oxide -OGfp-, b) statistical diagram of the topography corresponding to (a), c) graphene oxide -OGp- and d) profile of the line indicated in (c).
Figure 7.- Atomic force microscopy images of derivatives of a coke prepared from super premium petroleum coke: a) coke oxide -OGfsp-and graphene oxide -OGsp- b) profile corresponding to (a), c) profile of graphene oxide -OGsp-.
Figure 8.- Transmission electron microscope (TEM) image of thermally reduced graphene -TROGc- from an oxide of carbochemical coke.
Figure 9.- Atomic force microscopy images of a derivative of a coke prepared from a carbochemical coke through exfoliation with NMP -Gex- a) image, b) corresponding profile.
Figure 10.- Raman spectrum of a derivative of a coke prepared from a carbochemical coke through exfoliation with NMP -Gex-.

### EXAMPLES

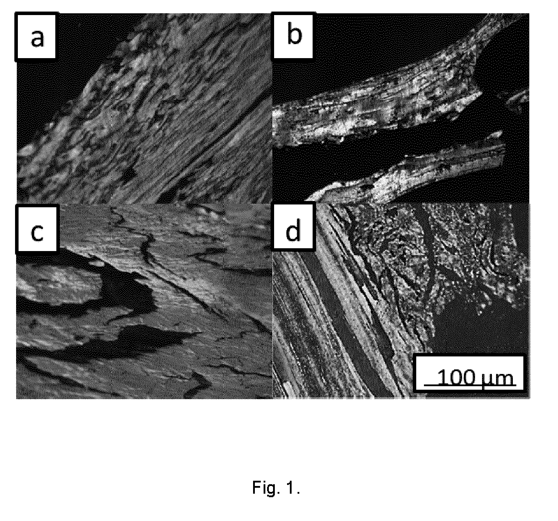

The following describes a series of tests performed by the inventors, which are representative of the effectiveness of the method of the invention in using pregraphitic materials to prepare graphene, graphene oxide or pregraphitic material oxide. These examples are illustrated in Figures 1-7 and in Tables 1 and 2 and should not limit the application of the present invention, as defined in accordance with the corresponding claims.

### Example 1.- Use of carbochemical coke as pregraphitic material for the production of its oxide and graphene oxide by chemical methods.

The commercial carbochemical coke used as the starting pregraphitic material was obtained industrially from derivatives of coal tar. Its elemental composition is 98.36% carbon, 0.06% hydrogen, 0.88% nitrogen, 0.19% sulfur and 0.23% oxygen, and it has an ash content of 0.26% (Table 1). The Raman spectrum shows an ID/IG ratio of 0.82 (Table 1). While XRD demonstrated an interplanar height of 4.19 nanometres with interplanar spaces of 0.34 nanometres (Table 1). The pregraphitic material's crystalline microstructure was determined using polarised light optical microscopy (Figure 1a) showing a structure of fluid domains with sizes that can exceed 1 cm in length and 50 micrometers in width.

Coke oxide was obtained from carbochemical coke as described below. To a flask equipped with magnetic stirring and at 0 °C are added 120 millilitres of sulfuric acid, 2.5 grams of coke that has been milled and sieved to less than 75 micrometers and 2.5 grams of sodium nitrate, the mixture is then stirred for 5 minutes. After this time has elapsed, 15.8 grams of potassium permanganate is slowly added, the temperature is raised to 35 °C and the mixture stirred for 3 hours. Then, 500 millilitres of 3% hydrogen peroxide is added and the mixture is stirred at room temperature for 1 hour. Once the reaction is complete the mixture is transferred to two separate centrifuge tubes and centrifuged at 4,700 revolutions per minute for 1 hour. Distilled water is added to the decanted solid obtained with sufficient volume to fill the centrifuge tube and the previous centrifugation process is repeated until the decanted solution has a pH of around 6-7 (measured with pH indicator paper). Distilled and deionised water is then added and the centrifuge process is repeated again.

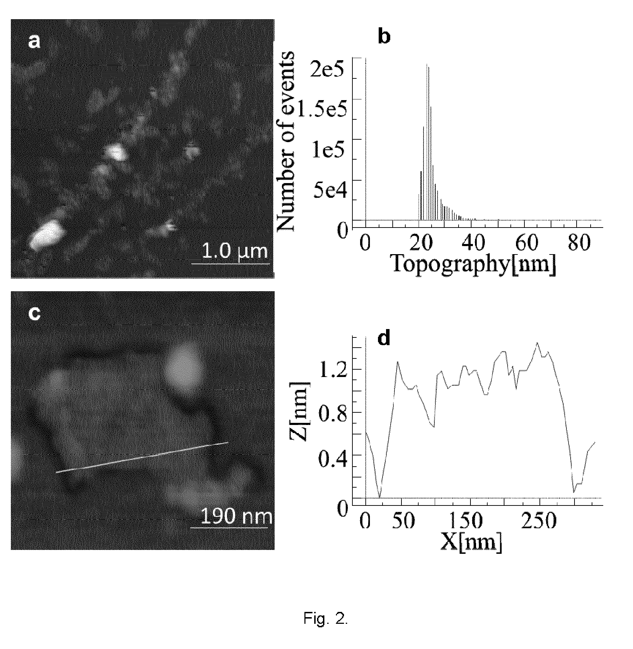

The solid obtained in this way is the oxide of the carbochemical coke and it was called OGfc. This solid was characterised using several techniques. The number of stacked sheets and their dimensions were determined using AFM (Figure 2a, b). The material was found to be around 10-100 micronmeters in length and 0.25 micrometers in width, consisting of 10-12 stacked sheets (assuming a sheet thickness of around 1.3 nanometres). It is interesting to highlight the formation of "needle" like structures that resemble the microcrystalline structures observed in this coke using optical microscopy.

In order to obtain graphene oxide the OGfc was submitted to ultrasound treatment at room temperature for 60 minutes. This is the time required for the separation of the sheets and formation of the corresponding graphene oxide, called OGc. This is confirmed by AFM (Figure 2c,d), which shows the preponderance of monolayers of graphene with surface dimensions of around one micrometer and a layer height of 1.0-1.4 nanometres, similar to other graphene oxides obtained from graphites.

Raman microscopy analysis, showing a profile that was similar to that of other graphene oxides, shows the presence of the two bands that are characteristics of graphene oxide (defect band D and graphitic order band G) with an intensity ratio between them (Id/Ig) of 0.93 (Table 2).

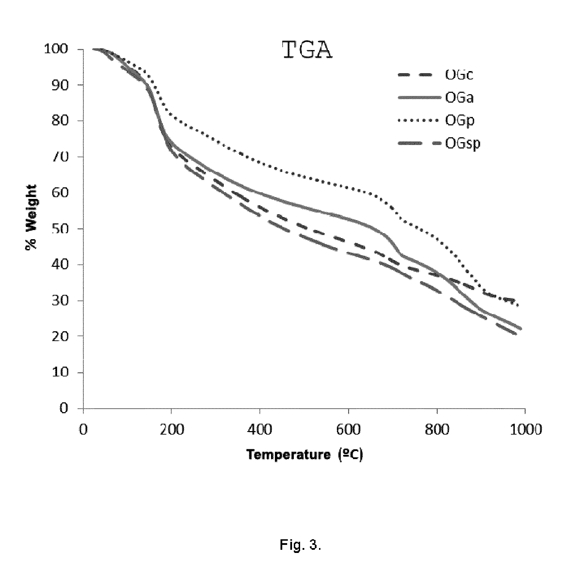

Weight losses of the functional oxygen groups were determined using thermogravimetric analysis (Figure 3) giving profiles that were similar to those obtained for other graphene oxides. These functional groups were characterised using XPS (Table 2). The calculated atomic C/O ratio was 3.17. The deconvolution of the high resolution spectrum corresponding to the C1s carbon also obtained using XPS (Table 2) shows a Csp² content of 48.17% while the predominant oxygenated functional groups are C-OH (14.91%) and C(O)OH (14.39%).

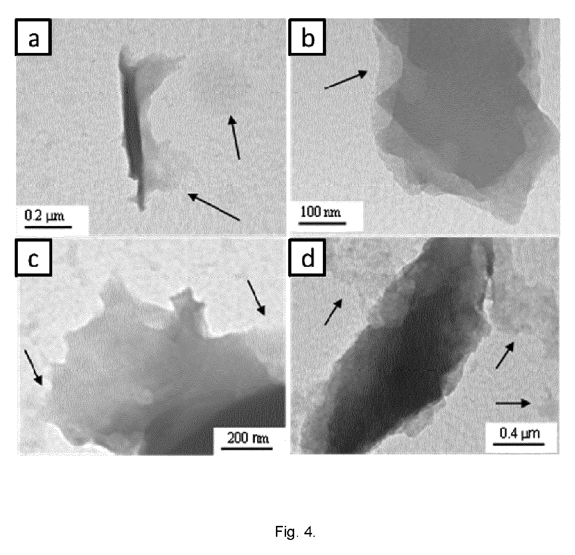

The transmission electron microscope images of OGc are shown in Figure 4a.

### Example 2.- Use of synthetic carbochemical coke prepared from a semisynthetic anthracene oil-based pitch as the pregraphitic material for the production of the corresponding oxide and of graphene oxide by chemical methods.

The synthetic coke used as a starting pregraphitic material was prepared in the laboratory from a commercial semisynthetic anthracene oil-based pitch (see reference Botas C., Alvarez P., Blanco C., Santamaría R., Granda M., Ares P., Rodríguez-Reinoso F., Menéndez R. The effect of the parent graphite on the structure of graphene oxide. Carbon, 2012, 50 (1), 275-282). To do this the pitch was subjected to thermal treatment under a nitrogen atmosphere up to a temperature of 1,000°C using a heating velocity of 10°C minute⁻¹ and a residence time of 1 hour. The elemental composition of the resulting coke is 96.50% carbon, 0.98% hydrogen, 1.38% nitrogen, 0.30% sulfur and 0.84% oxygen. Due to the special nature of the pitch, obtained by polymerisation of a heavy distillation fraction from coal tar, this coke completely lacks any mineral matter. The material's pregraphitic structure was determined using polarised light optical microscopy (Figure 1b) showing a structure of fluid domains with sizes that can exceed 20 micrometers in length and 20-50 micrometers in width.

Both the coke milling and treatment process and the centrifugation and washing process of the coke oxide (OGfa) is analogous to that undertaken for the carbochemical coke (Example 1) and it is not detailed in this example.

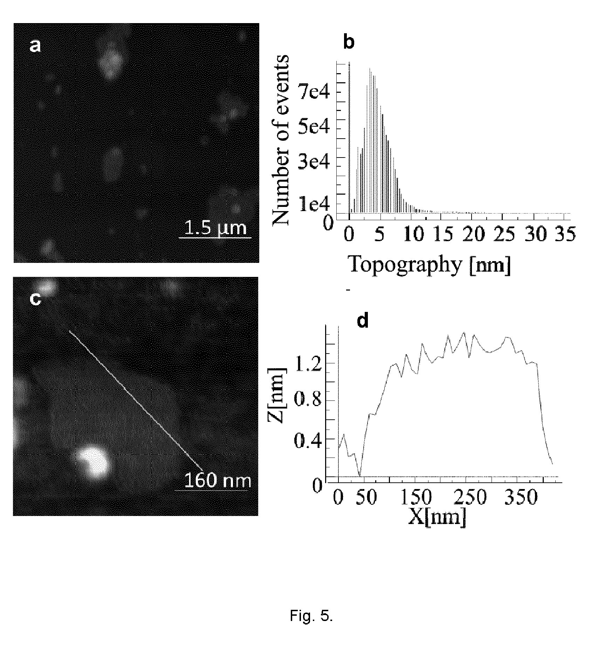

The OGfa's characteristics were determined using AFM (Figure 5a, b), which showed that the sheet sizes varied between 150 nanometres and 500 nanometres. The predominant formation can be seen to be clusters of 4-5 sheets (assuming a sheet thickness of around 1.3 nanometres).

The OGfa exfoliation process giving rise to the OGa graphene oxide is also analogous to that described in Example 1. AFM of this graphene oxide (Figure 5c, d) shows the formation of monolayers of around 350 nanometres with a sheet height of 1.2-1.4 nanometres, similar to those obtained for other graphene oxides. The Id/Ig ratio calculated by Raman for this OGa oxide is 0.93 (Table 2).

The thermogravimetric analysis of these graphene oxides shows a profile similar to other graphene oxides obtained from graphites and carbochemical cokes (Figure 3).

The quantification of the C/O atomic ratio for these graphene oxides, calculated using XPS (Table 2) is 2.40. Deconvolution of the XPS C1s spectrum shows the predominant functional oxygenated groups to be C-OH (13.05%) and C(O)OH (10.20%). All these values are within the range of other graphene oxides obtained from graphitic derivatives.

The transmission electron microscope images of OGa are shown in Figure 4b.

### Example 3.- Use of premium petroleum coke as pregraphitic material for the production of its oxide and graphene oxide by chemical methods.

Premium petroleum coke is a commercial coke obtained from oil residues. Its elemental composition is 98.33% carbon, 0.15% hydrogen, 0.31% nitrogen, 0.35% sulfur and 0.11% oxygen and it has an ash content of 0.76%. The material's pregraphitic structure was determined using polarised light optical microscopy (Figure 1 c) showing a structure of fluid domains with sizes of 1 cm in length and 10-50 micrometers in width.

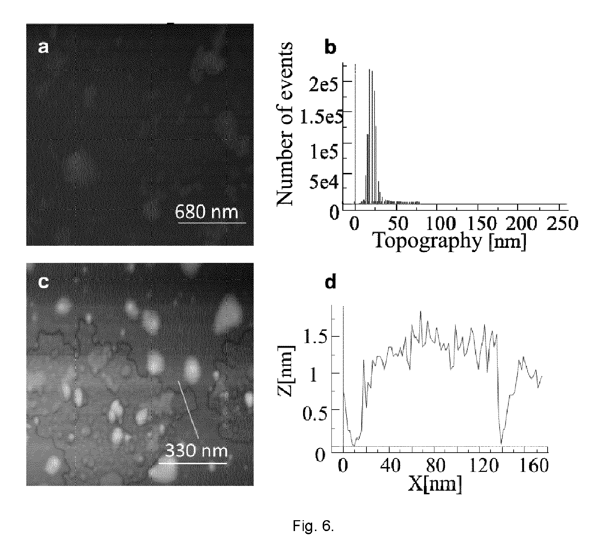

Both the coke milling and treatment process and the centrifugation and washing process of the coke oxide (OGfp) are analogous to that undertaken for the carbochemical coke (Example 1) and it is not detailed in this example. The characteristics of the OGfp were determined using AFM (Figure 6a, b), which shows variable sheet sizes (100-300 nanometres) corresponding to stacks of 20 sheets (assuming a sheet thickness of 1.3 nanometres).

The OGfp exfoliation process giving rise to the OGp graphene oxide is also analogous to that described in Example 1. AFM analysis of this graphene oxide (Figure 6c, d) shows the formation of monolayers with a length and width of 600-900 nanometres and a thickness of 1.0-1.5 micrometers, similar to the other graphene oxides. The Id/Ig ratio calculated by Raman for this OGp oxide is 0.93 (Table 2).

The thermogravimetric analysis of these graphene oxides shows a profile similar to other graphene oxides obtained from graphites and carbochemical and synthetic cokes (Figure 3).

The quantification of the C/O atomic ratio for these graphene oxides, calculated using XPS (Table 2) is 3.74. Deconvolution of the XPS C1s spectrum shows the predominant functional oxygenated groups to be C-OH (12.77%) and C(O)OH (12.29%). All these values are within the range of other graphene oxides obtained from graphitic derivatives.

The transmission electron microscope images of OGa are shown in Figure 4c.

### Example 4.- Use of super premium petroleum coke as pregraphitic material for the production of its oxide and graphene oxide by chemical methods.

Super premium petroleum coke is a commercial coke obtained from petroleum tars. Its elemental composition is 98.56% carbon, 0.09% hydrogen, 0.49% nitrogen, 0.41% sulfur and 0.25% oxygen and it has an ash content of 0.20%. The material's pregraphitic structure was determined using polarised light optical microscopy (Figure 1d) showing a structure of fluid domains with crystalline structures that can exceed 2 cm in length and 20-30 micrometers in width.

The milling process for the super premium coke is analogous to that described in Example 1. It was treated using the process described in Example 1 but with the following reagent quantities: 7.5 grams of coke, 7.5 grams of sodium nitrate, 47.5 grams of potassium permanganate, 360 millilitres of sulfuric acid and 1.5 litres of 3% hydrogen peroxide.

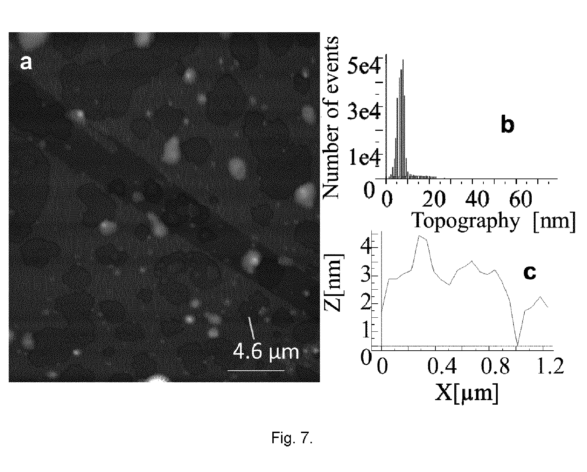

The characteristics of the coke oxide (OGfsp) was determined using AFM (Figure 7a, b) and has sheet sizes above 20 micrometers corresponding to stacks of less than 10 layers (assuming a sheet thickness of 1.3 nanometres), which seems to indicate that this coke is highly oriented (Figure 1d) with a clear tendency for exfoliation rather than breaking of the sheet during the oxidation treatment.

The OGfsp exfoliation process giving rise to the OGsp graphene oxide is also analogous to that described in Example 1. Figure 7a, c shows how the small monolayer size obtained by ultrasound (1 micrometer, line marked in Figure 7a) corresponds to the breaking of the sheets of coke oxide OGfsp. The Id/Ig ratio calculated by Raman for this OGp oxide is 0.87 (Table 2).

The thermogravimetric analysis of these graphene oxides shows a profile similar to other graphene oxides obtained from graphites and carbochemical and synthetic cokes (Figure 3).

The quantification of the C/O atomic ratio for these graphene oxides, calculated using XPS (Table 2), is 2.90. Deconvolution of the XPS C1s spectrum shows the predominant functional oxygenated groups to be C-OH (16.35%) and C(O)OH (15.21%). All these values are within the range of other graphene oxides obtained from graphitic derivatives.

The transmission electron microscope images of OGa are shown in Figure 4d.

### Example 5.- Thermal reduction of a graphene oxide obtained from a carbochemical coke oxide.

The starting product used in this example is a graphene oxide obtained from a carbochemical coke -OGc-, obtained using the process described in Example 1.

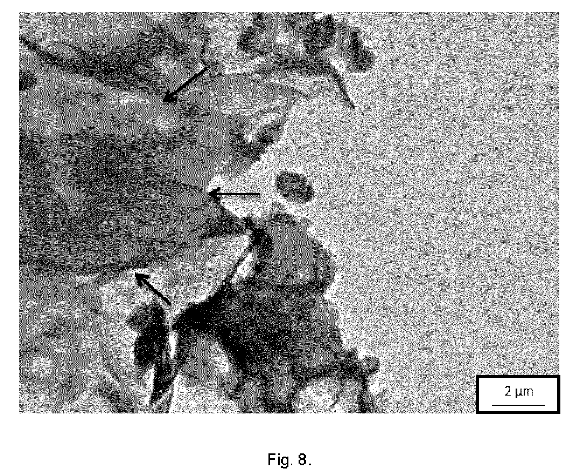

The reduction of the coke oxide was undertaken by thermal treatment performed in the following manner: 0.5 grams of OGc is placed in a tubular oven under an inert nitrogen atmosphere and heated up to a temperature of 1,000 °C using heating ramps of 5 °C minute⁻¹. Once the temperature is reached it is maintained for 1 hour followed by cooling to room temperature to give rise to the partially reduced graphene oxide (graphene) called TRGc. Figure 8 shows its TEM image and the structure can be seen to be the wrinkled monolayer typical of graphenes that have been thermally reduced from commercial graphene oxides.

The Id/Ig ratio calculated by Raman for this TRGc is 0.99 (Table 2). The quantification of the C/O atomic ratio for this graphene thermally reduced at 1,000 °C, calculated using XPS (Table 2), is 11.80, which agrees with the elimination of functional groups due to their decomposition with temperature. Deconvolution of the XPS C1 s spectrum shows the predomination of sp² bonds, demonstrating the reconstruction of the graphitic structure within the sheet, similar to that obtained in the thermal reduction of graphene oxides from graphites.

### Example 6.- Use of carbochemical coke as a raw material for the production of graphene by solvent exfoliation.

The carbochemical coke used as a starting material is the same as that described in Example 1 (characteristics described in Table 1 and Figure 1).

Graphene was obtained from carbochemical coke as described below. To a flask equipped with magnetic stirring are added 50 milligrams of coke that has been milled and sieved to less than 75 micrometers and 100 millilitres of N-methyl-pyrrolidinone (NMP). The mixture was submitted to ultrasound treatment at room temperature for 2 hours. This is the time required for the separation of the sheets and formation of the solvent exfoliated graphene we call Gex. Once the reaction is complete the mixture is transferred to two separate centrifuge tubes and centrifuged at 13,500 revolutions per minute for 1 hour. The solid obtained is decanted and the centrifugation process is repeated 3 times with 25 millilitres of clean NMP each time and with elimination of the solvent by decanting before addition of the new solvent. The operation is repeated 3 times more using isopropanol as a solvent in place of NMP. Next, 100 millilitres of isopropanol is added to the solid and the solution is centrifuged at 3,500 revolutions per minute for 5 minutes. The final solid obtained is discarded and the solution characterised using different techniques.

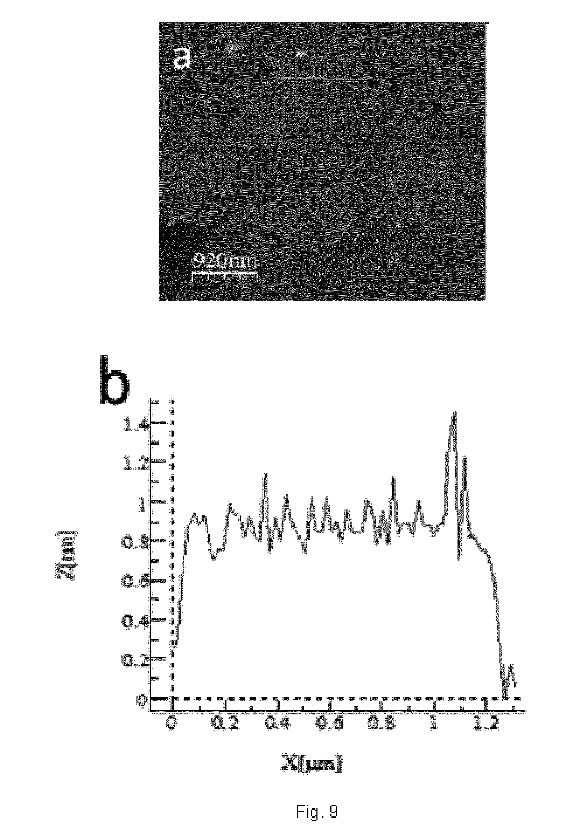

AFM analysis of the sample (Figure 9) confirms the exfoliation of the coke and the formation of monolayers. It is interesting to note that the average sheet height of 0.8 nanometres is less than that observed for the graphene oxides and corresponds to the heights of the solvent exfoliated graphenes obtained from graphite. The average sheet sizes are between 800 nanometres and 1.1 micrometers.

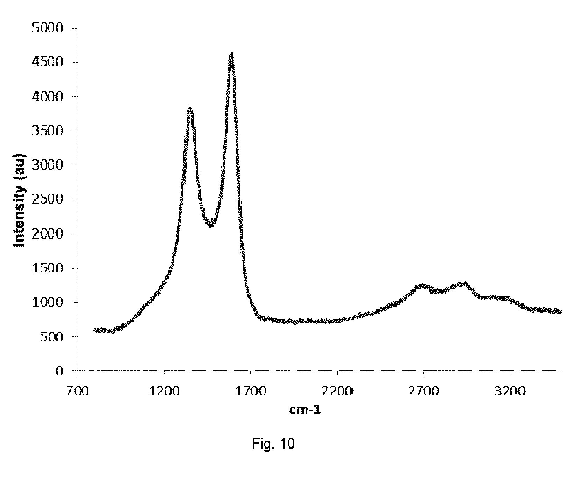

Raman microscope analysis shows a profile similar to those of the graphenes, showing the presence of the two characteristic bands (defect band D and graphitic order band G) (Figure 10).

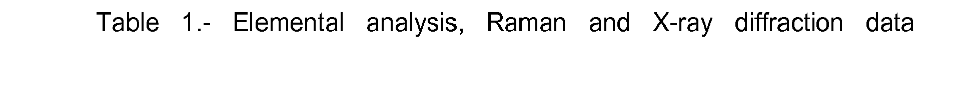

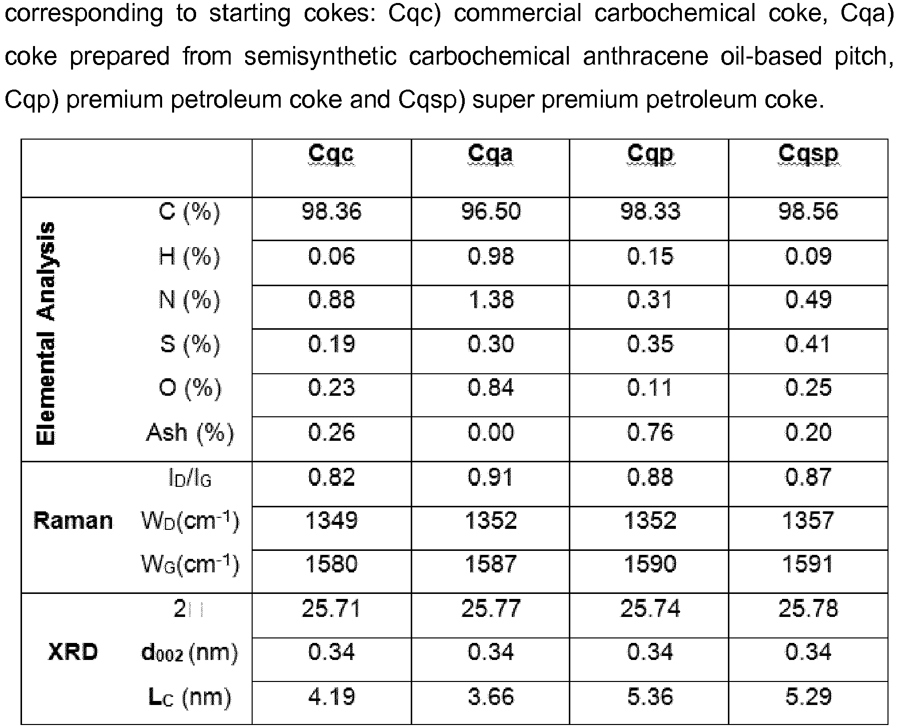

Table 2.- D and G band ratios (Id/Ig) obtained from Raman spectra and XPS data (including results for the deconvolution of the C1s high resolution peak) for the graphene oxides obtained from commercial carbochemical coke (OGc), coke prepared from semisynthetic carbochemical anthracene oil-based pitch (OGa), premium petroleum coke (OGp), super premium petroleum coke (OGsp) and thermally reduced graphene (TRGc).

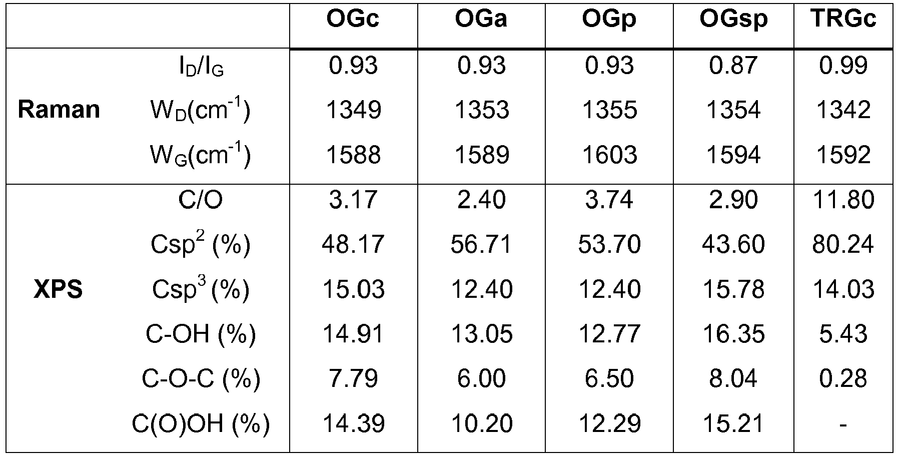

## Claims

1. Method for obtaining graphene that comprises the treatment of a pregraphitic material through its laminar separation at a temperature lower than 1,500 °C, preferably lower than 1,200 °C and more preferably lower than 1,000 °C.

2. Method according to claim 1, wherein prior to the treatment of the pregraphitic material it is milled or sieved to a size of at least 100 micrometers , preferably between 70-100 micrometers.

3. Method according to either of claims 1 or 2, wherein the laminar separation is undertaken through exfoliation, intercalation or thermal shock.

4. Method according to claim 3, wherein the laminar separation is undertaken through solvent exfoliation.

5. Method according to claim 4, where ultrasound is also used.

6. Method according to claim 1, which also comprises the following steps:
a) optional milling or sieving of the pregraphitic material to a size lower than 100 micrometersmicrometers, preferably between 70-100 micrometersmicrometers,
b) oxidative transformation of the pregraphitic material or of the pregraphitic material from a) into its corresponding oxide,
c) optional separation and/or purification of the solid oxide obtained by the oxidation of the pregraphitic materials in b),
d) obtaining graphene oxide from the solid oxide obtained in b) or c), and
e) obtaining graphene from pregraphitic material or from the pregraphitic material in a) or from the graphene oxide in d);
wherein the temperature in any of the steps is lower than 1,500 °C,
preferably lower than 1,200 °C and more preferably lower than 1,000 °C.

7. Method according to claim 6, where step a) and/or step c) are undertaken in said method.

8. Method for obtaining a product selected from a group that comprises pregraphitic material oxide, graphene oxide and graphene, **characterised by** starting from a pregraphitic material, without using temperatures above 1,500 °C in any of the method's steps and comprising the following steps:
a) milling or sieving of the pregraphitic material to a size lower than 100 micrometersmicrometers, preferably between 70-100 micrometersmicrometers,
b) oxidative transformation of the pregraphitic material from a) into its corresponding oxide,
c) separation and/or purification of the solid oxide obtained by the oxidation of the pregraphitic materials in b),
d) obtaining graphene oxide from the solid oxide obtained in c), and
e) obtaining graphene from the graphene oxide in d).

9. Method according to any of claims 1 to 8 **characterised in that** the pregraphitic material is coke.

10. Method according to claim 9 **characterised in that** the coke belongs to the following group: petroleum cokes, carbochemical cokes and synthetic cokes.

11. Method according to any of claims 1 to 10 **characterised in that** the product is graphene obtained from coke as a pregraphitic material.

12. Method according to any of claims 6 to 11 **characterised in that** step b) is undertaken through a technique belonging to the following group: chemical treatment or reduction, intercalation, thermal shock, exfoliation and thermal reduction of coke oxide and reduction with hydrogen.

13. Method according to claim 12 **characterised in that** step b) is undertaken through chemical treatment of the pregraphitic materials using sodium nitrate potassium permanganate, sulfuric acid, hydrogen peroxide, distilled water and deionised water as reagents.

14. Method according to claim 13 **characterised in that** step b) is undertaken through chemical treatment of the pregraphitic materials with ratios between the weights of the pregraphitic material/sodium nitrate/potassium permanganate of between 1/1/7 and 1/1/3 and preferred reaction volumes of 20 vol% for sulfuric acid and 80 vol% for 3% hydrogen peroxide or also 20 vol% for sulfuric acid and 8 vol% for hydrogen peroxide and 72% distilled water, expressed relative to the total reaction volume.

15. Method according to any of claims 6 to 14 **characterised in that** step c) is undertaken through a technique belonging to the following group: centrifugation and subsequent decantation of the supernatant, ultracentrifugation or dialysis.

16. Method according to any of claims 6 to 15 **characterised in that** the pregraphitic material is coke and the product obtained is coke oxide.

17. Method according to any of claims 6 to 16 **characterised in that** step d) is undertaken through the separation of the graphene oxide sheets.

18. Method according to claim 17 **characterised in that** the separation of the graphene oxide sheets is undertaken through a technique belonging to the following group: intercalation, exfoliation and thermal shock.

19. Method according to claim 18 **characterised in that** the separation of the sheets is undertaken through exfoliation with ultrasound.

20. Method according to any of claims 6 to 19 **characterised in that** the pregraphitic material is coke and the product obtained is graphene oxide.

21. Method according to any of claims 6 to 20 **characterised in that** step e) is undertaken through a technique for the reduction of the graphene oxide belonging to the following group: chemical reduction, with hydrogen, electrochemical reduction and combinations thereof.

22. Method according to claim 21 **characterised in that** the reduction technique is a thermal reduction of the graphene oxide under the following conditions:
i.- temperature in the range of 800-1,500 °C, preferably between 800-1,000 °C, or more preferably 1,000 °C, with heating ramps of around 1-30 °C minutes⁻¹, preferably 5 °C per minute;
ii.- residence time at the final temperature of between 0 and 2 hours, preferably for 1 hour, and
iii.- in an inert atmosphere such as, preferably, nitrogen.

23. Product belonging to the following group: an oxide of the starting pregraphitic material, graphene oxide or graphene **characterised in that** it is obtained by a method according to any of claims 1 to 22.

24. Product according to claim 23 **characterised in that** the product is graphene.

25. Use of a product according to any of claims 23 and 24 for applications belonging to the following group: catalysts, imaging devices, microelectronics and energy storage.
